# EUROPEAN PATENT SPECIFICATION

(11) **EP 4 296 128 B1**
(45) Date of publication and mention of the grant of the patent: **11.06.2025**
(21) Application number: 22180222.6
(22) Date of filing: 21.06.2022
(51) Int. Cl.: B60T 17/00, B01D 27/08, B01D 53/04, B01D 53/26

(54) **POSITIONING AND MOUNTING INTERFACE, A DESICCANT CARTRIDGE AND AN AIR CONTROL DEVICE**
POSITIONIER- UND MONTAGESCHNITTSTELLE, TROCKENMITTELPATRONE UND LUFTSTEUERVORRICHTUNG
INTERFACE DE POSITIONNEMENT ET DE MONTAGE, CARTOUCHE D'AGENT SICCATIF ET DISPOSITIF DE COMMANDE D'AIR

(43) Date of publication of application: 27.12.2023
(73) Proprietor: KNORR-BREMSE Systeme für Nutzfahrzeuge GmbH, 80809 München (DE)
(72) Inventor: TOTH, Zoltan Laszlo, 6100 Kiskunfélegyháza (HU); OLAH, Tibor, 6000 Kecskemét (HU); SAJBEN, Peter, 6034 Helvécia (HU)

(56) References cited:
- WO-A1-2014/109767
- US-A1- 2014 231 336
- US-A1- 2018 193 780

## Description

The present invention relates to a positioning and mounting interface for positioning a desiccant cartridge in and mounting to an air control device of a vehicle, especially a utility vehicle.

Further, the present invention relates to a desiccant cartridge comprising an interface as mentioned above.

And additionally, the present intention relates to an air control device for a vehicle, especially a utility vehicle, comprising a desiccant cartridge as mentioned above.

In practice, it is known that in the field of vehicles and especially utility or commercial vehicles, usually pneumatic systems are used for brakes, suspension and other auxiliary systems, wherein the distribution of the air is handled by an electronic air control device or a multi-circuit protection valve that can divide the air provided by a compressor or the like, and handles the different opening and closing pressures, the pressure limitation of each circuits, and the circuit protection.

Before the pressurized air may be controlled this way, an important measure is to dry this air (as it still contains humidity of the atmosphere) provided by the compressor. This drying procedure is established by a desiccant or air dryer cartridge being arranged between the compressor and the air control device such that dried and de-oiled air is provided to the multi-circuit protection valve.

Such conventional desiccant cartridges are already known in the prior art.

DE 32 08 561 A1 shows an air-drying device having a connection housing on which a cap-shaped container is mounted, which accommodates a drying agent cartridge. For ease of changing the drying agent cartridge, a clamping bracket is used, which is swivellably mounted on the housing and can be swivelled over the container and fixed there.

DE 692 10 614 T2 discloses an air dryer control system in which the compressed air output of a compressor is dried by one of two air dryers connected in parallel. The purging and drying cycles of the air dryers are alternated by a timing and relay device.

EP 0 933 117 A1 discloses a shuttle valve for a gas drying system that cleans and dries a stream of unpurified pressurized gas received from a source thereof and supplied to a pneumatic system that uses such a purified pressurized air. The valve includes a housing that connects a drying assembly to a structure that conveys the unpurified pressurized air to the drying assembly.

EP 2 448 801 A1 shows an air dryer cartridge for a compressed air treatment system of a vehicle, in particular of a commercial vehicle, comprising a spring cover and a carrier element, which together define a volume of the air dryer cartridge in the assembled state of the air dryer cartridge, wherein a desiccant box arranged inside the volume and filled with a desiccant is provided.

US 5,901,464 A relates to a twin tower air drying system for cleaning and drying a stream of unpurified pressurized air including a centrifugal separator having a baffle horizontally disposed therein to generally separate the centrifugal chamber into an upper sub-chamber and a lower sub-chamber; a pair of cavities each containing desiccant media and a purge tube with a flapper valve thereover to close and restrict flow of air through the purge tube when air is flowing upwardly through the cavity, and to open and promote air flow through the purge tube when air is flowing downwardly through the cavity.

US 5,961,698 A discloses a twin tower gas drying system for cleaning and drying a stream of unpurified pressurized gas received from a source thereof for use of a pneumatic system. The drying system includes a manifold block provided with the plurality of ports. A separator and sump are connected to such a block and to one of the ports for initially separating moisture and particulates from such stream of unpurified gas, and for directing the remainder of the stream to the one port in the block.

EP 3 433 001 B1 discloses a bayonet fixation mechanism for an air dryer cartridge.

DE 82 28 745 discloses a depressurization screw with an axial bore hole and a radial bore hole, which a connected to each other a where the bore holes as depressurization channel.

DE 10 2007 011 256 A1 discloses a fixation and securing element for a pressurized air system.

DE 10 2016 208 355 A1 and DE 10 2018 113 967 A1 describe a radial sealing element for an air dryer cartridge of a depressurization system. US2014231336A1 describes a fuel filter bayonet-style cartridge attachment.

Basically, according to the prior art, the fixing between the desiccant cartridge and air control device accommodating said cartridge is often solved by one central threaded portion in combination with a bayonet locking. Thus, a large number of components and construction space together with a high assembling effort are necessary.

It is therefore an object of the present invention to improve a positioning and mounting interface between a desiccant cartridge and an air control device as mentioned above, in particular in that this interface is simplified in structural and functional terms and that the desiccant cartridge is easier to mount to the air control device.

This object is solved according to the present invention with a positioning and mounting interface according to the features of claim 1. Accordingly, a positioning and mounting interface for positioning a desiccant cartridge in and mounting to an air control device of a vehicle, especially a utility vehicle, is provided. The interface comprises an annular portion having at least one recess for engaging with at least one pin of a receiving portion of the air control device.

The invention is based on the basic idea that a positioning and mounting interface for positioning a desiccant cartridge in and mounting to an air control device of a vehicle, especially a utility vehicle, is provided which allows for an easy tactile assembly in which the correct or proper positioning and (final) engagement for the mounting of the cartridge into the air control device is controlled by means of haptic feedback. Since neither the interface nor the pins of the receiving portion of the air control device are visible to the user after the cartridge has been placed onto the receiving portion, it is necessary to rotate the cartridge around its vertical axis to reach the correct mounting position. The structure of the interface, comprising inter alia a special rib geometry, and the arrangement of the pins ensure that the mounting position is reached within a maximum of 360 degrees of rotation and that there is only one possible mounting position. Once this mounting position is reached, the pins of the receiving portion engage into the recesses formed in the annular portion and the user can push down the cartridge into its final assembly position within the receiving portion. In a subsequent assembly step, the cartridge is then secured with a bayonet ring at its outer circumference to the air control device.

The annular portion, which preferably comprises said special rib geometry, protrudes or projects from the plane of the interface, as do the pins from the receiving portion of the air control device, whereby the annular portion rests on the pins after the cartridge is placed onto the receiving portion. The cartridge is additionally supported on the inner circumference of the receiving portion. As a result, the cartridge is initially inclined or tilted relative to the receiving portion, i.e. after placement but before full rotation, unless the final assembly position is not reached directly with placement.

The shape of the interface according to the present invention requires less material than the previously used interfaces having a fully formed and flat surface and is easier to manufacture.

In a possible embodiment of the present invention, the annular portion has at least two recesses for engaging with at least two pins of the receiving portion of the air control device.

It may be further provided that the interface further comprises a central annular bushing for engaging with a central nozzle of the receiving portion of the air control device, wherein the central annular bushing is arranged inside the annular portion.

The engaging or connection between the central annular bushing and the central nozzle, which is preferably sealed on the outside by an O-ring, ensures that the compressed air to be dried is conducted exclusively through the desiccant.

It is also conceivable that the annular portion and the annular bushing are spaced apart.

In order to be able to manufacture the annular portion and the central annular bushing in a more material-optimised way, it is advantageous if they are formed separately on the positioning and mounting interface.

Moreover, it is conceivable that the interface further comprises at least two pairs of supporting pins arranged radially outside the annular portion.

By this pairs of supporting pins the cartridge is supported against the inner circumference of the receiving portion during rotating. In addition, as the supporting pins may stay visible when the cartridge is placed onto the receiving portion, they may be used as additional positioning markers.

Furthermore, it is possible that each two recesses and/or each two pins enclose an angle less than 180 degrees.

If e.g. the angle between two pins is less than 180 degrees in relation to the centre of the receiving portion, it is ensured that the corresponding pins engage stably in the corresponding recesses when the mounting position is reached, i.e. in particular without any tilting of the cartridge around a shared axis formed by the pins and recesses in case these are arranged along this shared axis. Thus, a most likely unstable mounting position occurs if exactly two recesses and correspondingly two pins enclose a degree of 180 degrees.

It is also possible that a cross section of the at least one recess is formed at least partially as circular ring sector.

It should be understood that a ring sector is a cut from a ring, which is bordered by two straight lines from its centre. However, other recess shapes are possible and the shape of each recess may be different to the others.

It also conceivable that an inside radius of a first recess is greater than an inside radius of a second recess.

The offset of the recesses in relation to each other in the radial direction ensures that there is only one position for the corresponding pins of the receiving portion to engage in the recesses.

Moreover, it is possible that the first recess is open at the radially outward edge and the second recess has a fully closed edge.

This allows the corresponding pin to slide radially inwards into the first recess once the proper mounting position has been reached by rotation, thereby raising the cartridge from the tilted state relative to a plane of the receiving portion. At the same time, the other pin engages in the second recess with a fully closed edge in an approximately perpendicular engaging direction thereto.

It may further be provided that the annular portion comprises a plurality of ribs arranged transversely to the circumferential direction of the annular portion, wherein the plurality of ribs is preferably spaced equidistantly from each other.

In general, a corresponding part of the ribs of the annular ring rests on the pins when the desiccant cartridge is placed. During rotation, the heads or upper portions of the pins slide over the plurality of ribs, providing the user with tactile feedback regarding the progress of rotation. In addition, a rib geometry requires less material compared to a full body geometry.

It is further conceivable that the at least two pairs of supporting pins are arranged at the outer circumference of the interface contacting the inner circumference of the receiving portion of the air control device until the desiccant cartridge is positioned, wherein the supporting pins of each pair are spaced from each other enclosing an angle.

The desiccant cartridge is thus supported laterally during positioning, in particular rotating, into the receiving portion. Preferably, there is no contact between the supporting pins and the inner circumference of the receiving portion when the cartridge is fully mounted.

It may further be provided that the angle enclosed by a pair of first supporting pins is greater than the angle enclosed by a pair of second supporting pins, wherein preferably both angles are less than 90 degrees.

It is also possible that the first supporting pins and the second supporting pins are each symmetrical to the same axis, wherein the first supporting pins and the second supporting pins are arranged at opposite portions of the outer circumference of the interface.

It may further be provided that the interface further comprises a sieve portion arranged inside the annular bushing, wherein the sieve portion is permeable for pressurized air.

Coarser dirt particles can be sieved out of the pressurized air by an upstream sieve before the pressurized air flows through the desiccant.

It is further possible that the interface further comprises at least one outlet for a check valve arranged outside the annular portion.

The object of the present invention can further be solved by a desiccant cartridge comprising a housing and a cartridge insert having a positioning and mounting interface as described above, wherein the housing is attached to the cartridge insert.

The object of the present invention can further be solved by an air control device for a vehicle, especially a utility vehicle, comprising a receiving portion, a bayonet ring, and a desiccant cartridge as mentioned before which is mounted into the receiving portion and secured to the air control device by the bayonet ring

Further details and advantages of the present invention shall now be disclosed in an embodiment according to the invention in connection with the drawing.

It is shown in:
- Fig. 1: a sectional perspective view of an embodiment of a desiccant cartridge according to the present invention mounted to a receiving portion of an embodiment of an air control device according to the present invention;
- Fig. 2: a partial sectional view of the embodiment of the desiccant cartridge of Fig. 1;
- Fig. 3a: a top view of the receiving portion of the embodiment of the air control device of Fig. 1;
- Fig. 3b: a sectional perspective view of the receiving portion of the embodiment of the air control device of Fig. 1;
- Fig. 4: a view of the bottom side of a prior art embodiment of a positioning and mounting interface;
- Fig. 5: a view of the bottom side of an embodiment of a positioning and mounting interface according to the present invention; and
- Fig. 6: a sectional top view of the embodiment of the desiccant cartridge mounted to the receiving portion of the embodiment of the air control device of Fig. 1.

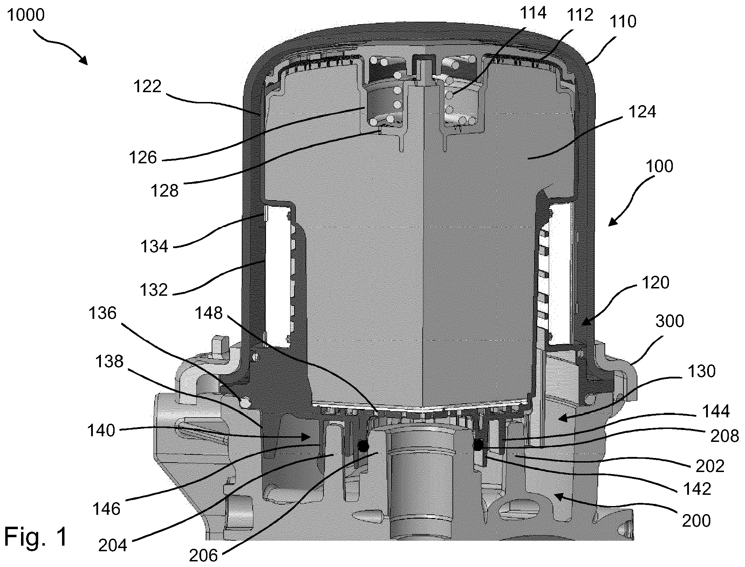

Fig. 1 shows a sectional perspective view of an embodiment of a desiccant cartridge 100 according to the present invention mounted to a receiving portion 200 of an embodiment of an air control device 1000 according to the present invention.

The desiccant cartridge 100 comprises a housing 110 and a cartridge insert 120.

The desiccant cartridge 100 is secured to the receiving portion by a bayonet ring 300 which engages the housing 110 of the desiccant cartridge 100.

The housing 110 comprises a spring cover 112 and a spring 114.

The cartridge insert 120 comprises a container 122 which contains the desiccant 124.

The container 122 includes at the top a desiccant cover 126 having a top sieve 128, and at the bottom a positioning and mounting interface 130.

The spring 114 is arranged between the spring cover 112 and the desiccant cover 126.

The cartridge insert 120 is laterally surrounded by a coalescing filter 132 which is hold in place by filter retainers 134. Accordingly, the coalescing filter 132 is arranged between the cartridge insert 120 and the housing 110.

A first O-ring 136 is placed between the container 122 and the upper edge of the receiving portion 200 to seal it.

The positioning and mounting interface 130 comprises supporting pins 138, which are arranged at the outer circumference of the positioning and mounting interface 130, an annular portion 140, and a central annular bushing 142.

The annular portion 140 comprises a first recess 144, which is open at the radially outward edge, and a second recess 146 having a fully closed edge.

The receiving portion 200 comprises a first pin 202, a second pin 204, and a central nozzle 206.

The first pin 202 is partially accommodated in the first recess 144, and the second pin 204 is partially accommodated in the second recess 146.

A second O-ring 208 is arranged between the central annular bushing 142 of the positioning and mounting interface 130 and the central nozzle 206 of the receiving portion 200.

The fact that the first recess 144 does not have an outward boundary allows the first pin 202 to slide into the first recess 144 from the outside during rotation.

The positioning and mounting interface 130 further comprises a bottom sieve portion 148 which is arranged centrally and is located above the central nozzle 206 in the assembled state of the air control device 1000.

The supporting pins 138 support the desiccant cartridge 100 against the inner circumference of the receiving portion 200 during the positioning procedure.

The desiccant 124 absorbs the moisture of the compressed air that passes through it in order to dry it.

The coalescing filter 132, which comprises fibrous or wire mesh or fabric, filters oil and/or dirt particles from the air flowing through it.

The spring 114 damps the movement of the container 122 when the container 122 is deflected in the vertical direction referred to Fig. 1.

It can further be derived from Fig. 1 that the pins 202, 204 project more upwards from the receiving portion200 than the central nozzle 206. In other words, the pins 202, 204 are higher than the central nozzle 206. Hence, the desiccant cartridge 100 is slightly tilted to the plane of the receiving portion 200, when put on top of it, since the annular ring 140 rests on the pins 202, 204 before a sufficient rotation allows them to engage in the recesses 144, 146.

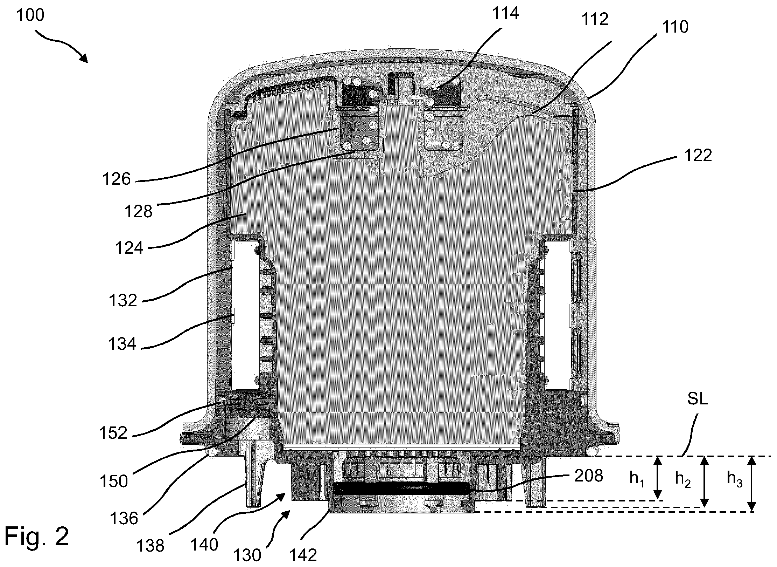

In Fig. 2, a partial sectional view in a different section plane of the embodiment of the desiccant cartridge 100 of Fig. 1 is presented.

The cartridge insert 120 further comprises at least one check valve 150 whose outlet is formed within the positioning and mounting interface 130 between the annular portion 140 and the outer circumference of the positioning and mounting interface 130.

Furthermore, in the view of Fig. 2, a further O-ring 152 is visible sealing the space between the housing 110 and the cartridge insert 120 from the environment.

Additionally, the different levels of protruding or projecting of the elements of the positioning and mounting interface 130 are shown in the view of Fig. 2. Referring to a common starting level SL in Fig. 2, the annular ring 140 protrudes downwards by a height h₁, the supporting pins 138 protrude downwards by a height h₂, and the central annular bushing 142 protrudes by a height h₃. In this respect, the following applies to the heights: h₁ < h₂ < h₃. But it should be understood that other heights including other ratios between the heights are possible.

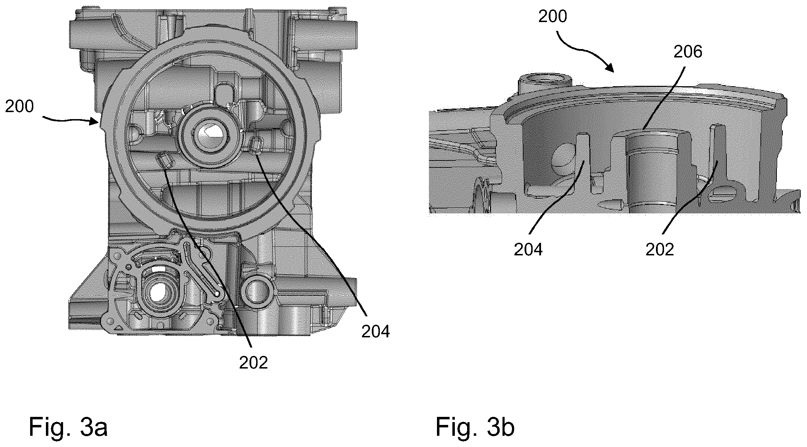

Fig. 3a shows a top view of the receiving portion 200, while Fig. 3b shows a sectional perspective view of the receiving portion 200.

In Fig. 3a, it can be seen that the first pin 202 and the second pin 204 are arranged on a common circular ring and enclose an angle of less than 180 degrees. Both pins 202, 204 are higher than the central nozzle 206, but do not protrude beyond the outer edge of the receiving portion 200, as can be derived from Fig. 3b.

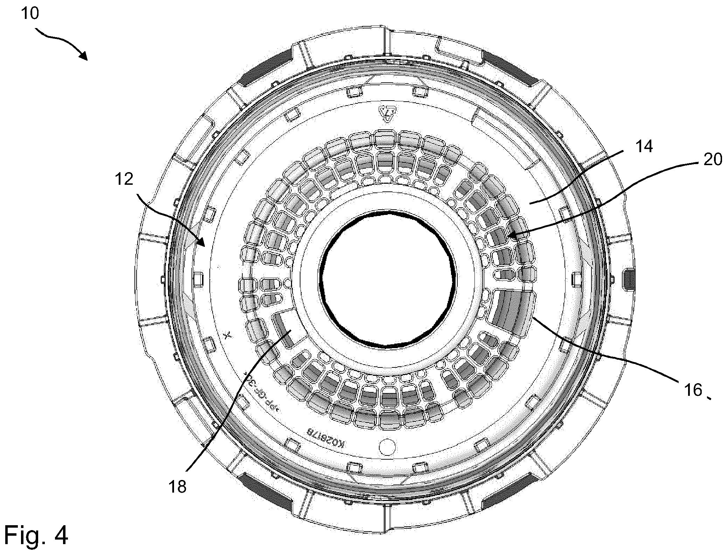

In Fig. 4, a view of the bottom side of a prior art embodiment of a positioning and mounting interface 10 is presented.

The prior art positioning and mounting interface 10 comprises a protruding circular portion 12 having a plane surface 14. Within the plane surface 14 a first recess 16 and a second recess 18 are formed, wherein the first recess 16 is slightly offset radially outwards in comparison to the position of the second recess 18. Furthermore, the first recess 16 is greater than the second recess 18.

Within the plane surface 14 of the circular portion 12, a structure 20 of circularly arranged openings is formed to make it easier for a user via a haptic feedback to guide the pins 202, 204 of the receiving portion 200 into the recesses 16, 18 during assembly rotation.

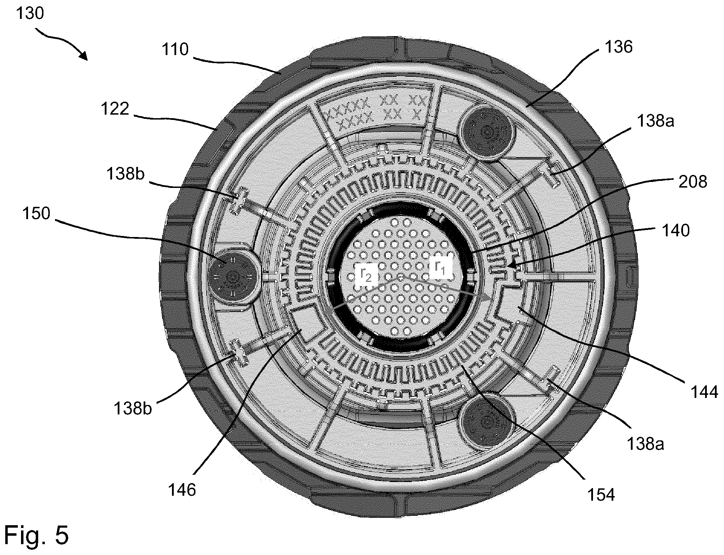

In comparison to the prior art interface 10 of Fig. 4, Fig. 5 presents a bottom side view of the positioning and mounting interface 130 according to the present invention, wherein the positioning and mounting interface 130 comprises three outlets of the corresponding check valves 150.

The annular ring 140 is formed by a plurality of ribs 154 which are spaced equidistantly to each other. These ribs 154 assist the user during the assembly rotation by giving him a tactile response regarding the amount of rotation. The pins 202, 204 slide over the ribs 154 with the spaces between the ribs 154 being perceptible to the user during rotation.

The first recess 144 and the second recess 146 are formed as circular ring sectors, wherein the inside radius r₁ of the first recess 144 is greater than the inside radius r₂ of the second recess 146.

Because the first recess 144 has no outer edge, the first pin 202 can slide into the first recess 144 during rotation of the desiccant cartridge 100, causing the desiccant cartridge 100 to straighten up, i.e. the vertical axis of the desiccant cartridge 100 is perpendicular to the base plane of the receiving portion 200.

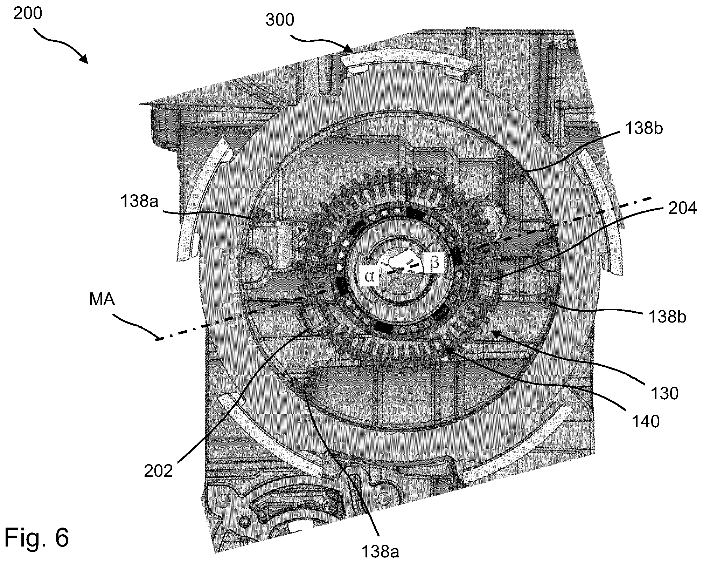

In Fig. 6, a sectional top view of the embodiment of the desiccant cartridge 100 mounted to the receiving portion 200 of the embodiment of the air control device 1000 of Fig. 1 is shown.

Of the desiccant cartridge 100 just a lower portion of the positioning and mounting interface 130 is presented to better understand the engaging and lateral support.

Until the desiccant cartridge 100 is not in the proper mounting position, the ribs 154 of the annular portion 140 rest on the first and the second pin 202, 204 of the receiving portion 200, and the desiccant cartridge 100 is laterally supported by the two supporting pin pairs 138a, 138b against the inner circumference of the receiving portion 200.

The first pair of supporting pins 138a encloses an angle α, while the second pair of supporting pins 138b encloses an angle β which is less than the angle α. Both angles α, β are preferably smaller than 90 degrees.

The two pairs of supporting pins 138a, 138b are arranged at opposite portions of the positioning and mounting interface 130. Furthermore, the supporting pins of each pair 138a, 138b are symmetrically arranged to a mirror axis MA.

It should be understood that the positioning and mounting interface 130 may comprise more than two pairs of supporting pins 138a, 138b and other arrangements may be possible as well to support the desiccant cartridge during the assembly.

### REFERENCE SIGNS

- 10: positioning and mounting interface (prior art)
- 12: annular portion (prior art)
- 14: plane surface (prior art)
- 16: first recess (prior art)
- 18: second recess (prior art)
- 20: structure of radially arranged openings (prior art)
- 100: desiccant cartridge
- 110: housing
- 112: spring cover
- 114: spring
- 120: cartridge insert
- 122: container
- 124: desiccant
- 126: desiccant cover
- 128: top sieve
- 130: positioning and mounting interface
- 132: coalescing filter
- 134: filter retainer
- 136, 152, 208: O-Ring
- 138: supporting pins
- 138a: first pair of supporting pins
- 138b: second pair of supporting pins
- 140: annular portion
- 142: central annular bushing
- 144: first recess
- 146: second recess
- 148: bottom sieve portion
- 150: check valve
- 154: ribs
- 200: receiving portion
- 202: first pin

- 204: second pin
- 206: central nozzle
- 300: bayonet ring
- 1000: air control device

- h₁, h₂, h₃: height
- r₁: inside radius of a first recess
- r₂: inside radius of a second recess
- MA: mirror axis
- SL: starting level

- α, β: enclosed angle

## Claims

1. A positioning and mounting interface (130) for positioning a desiccant cartridge (100) in and mounting to an air control device (1000) of a vehicle, especially a utility vehicle, wherein the interface (130) comprises an annular portion (140) having at least one recess (144, 146) for engaging with at least one pin (202, 204) of a receiving portion (200) of the air control device (1000), and **characterized in that** the interface (130) further comprises a central annular bushing (142) for engaging with a central nozzle (206) of the receiving portion (200) of the air control device (1000), wherein the central annular bushing (142) is arranged inside the annular portion (140).

2. The positioning and mounting interface (130) according to claim 1,
**characterized in that**
the annular portion (140) has at least two recesses (144, 146) for engaging with at least two pins (202, 204) of the receiving portion (200) of the air control device (1000).

3. The positioning and mounting interface (130) according to one of the preceding claims,
**characterized in that**
the interface (130) further comprises at least two pairs of supporting pins (138a, 138b) arranged radially outside the annular portion (140).

4. The positioning and mounting interface (130) according to one of the claims 2 to 3, **characterized in that**
each two recesses (144, 146) and/or each two pins (202, 204) enclose an angle less than 180 degrees.

5. The positioning and mounting interface (130) according to one of the preceding claims,
**characterized in that**
a cross section of the at least one recess (144, 146) is formed at least partially as a circular ring sector.

6. The positioning and mounting interface (130) according to one of the preceding claims,
**characterized in that**
an inside radius (r₂) of a second recess (146) is smaller than an inside radius (r₁) of a first recess (144).

7. The positioning and mounting interface (130) according to claim 6,
**characterized in that**
the first recess (144) is open at the radially outward edge and the second recess (146) has a fully closed edge.

8. The positioning and mounting interface (130) according to one of the preceding claims,
**characterized in that**
the annular portion (140) comprises a plurality of ribs (154) arranged transversely to the circumferential direction of the annular portion (140), wherein the plurality of ribs (154) is preferably spaced equidistantly from each other.

9. The positioning and mounting interface (130) according to one of claims 3 to 8, **characterized in that**
the at least two pairs of supporting pins (138a, 138b) are arranged at the outer circumference of the interface (130) contacting the inner circumference of the receiving portion (200) of the air control device (1000) until the desiccant cartridge (100) is positioned, wherein the supporting pins (138) of each pair (138a, 138b) are spaced from each other enclosing an angle (α, β).

10. The positioning and mounting interface (130) according to claim 9,
**characterized in that**
the angle (α) enclosed by a pair of first supporting pins (138a) is greater than the angle (β) enclosed by a pair of second supporting pins (138b), wherein preferably both angles (α, β) are less than 90 degrees.

11. The positioning and mounting interface (130) according to one of claims 1 to 10, **characterized in that**
the interface (130) further comprises a sieve portion (148) arranged inside the central annular bushing (142), wherein the sieve portion (148) is permeable for pressurized air.

12. The positioning and mounting interface (130) according to one of the preceding claims,
**characterized in that**
the interface (130) further comprises at least one outlet for a check valve (150) arranged outside the annular portion (140).

13. A desiccant cartridge (100) comprising a housing (110) and a cartridge insert (120) having a positioning and mounting interface (130) according to one the preceding claims, wherein the housing (110) is attached to the cartridge insert (120).

14. An air control device (1000) for a vehicle, especially a utility vehicle, comprising a receiving portion (200), a bayonet ring (300), and a desiccant cartridge (100) according to claim 14 which is mounted into the receiving portion (200) and secured to the air control device (1000) by the bayonet ring (300).

## Patentansprüche

1. Positionier- und Montageschnittstelle (130) zum Positionieren einer Trockenmittelpatrone (100) in einer Luftsteuervorrichtung (1000) eines Fahrzeugs, insbesondere eines Nutzfahrzeugs, und zum Montieren an dieser, wobei die Schnittstelle (130) einen ringförmigen Abschnitt (140) umfasst, der mindestens eine Aussparung (144, 146) zum Ineinandergreifen mit mindestens einem Stift (202, 204) eines Aufnahmeabschnitts (200) der Luftsteuervorrichtung (1000) aufweist, und **dadurch gekennzeichnet, dass**
die Schnittstelle (130) weiter eine zentrale ringförmige Buchse (142) zum Ineinandergreifen mit einer zentralen Düse (206) des Aufnahmeabschnitts (200) der Luftsteuervorrichtung (1000) umfasst, wobei die zentrale ringförmige Buchse (142) innerhalb des ringförmigen Abschnitts (140) angeordnet ist.

2. Positionier- und Montageschnittstelle (130) nach Anspruch 1,
**dadurch gekennzeichnet, dass**
der ringförmige Abschnitt (140) mindestens zwei Aussparungen (144, 146) zum Ineinandergreifen mit mindestens zwei Stiften (202, 204) des Aufnahmeabschnitts (200) der Luftsteuervorrichtung (1000) aufweist.

3. Positionier- und Montageschnittstelle (130) nach einem der vorstehenden Ansprüche,
**dadurch gekennzeichnet, dass**
die Schnittstelle (130) weiter mindestens zwei Paare Stützstifte (138a, 138b) umfasst, die radial außerhalb des ringförmigen Abschnitts (140) angeordnet sind.

4. Positionier- und Montageschnittstelle (130) nach einem der Ansprüche 2 bis 3,
**dadurch gekennzeichnet, dass**
jeweils zwei Aussparungen (144, 146) und/oder jeweils zwei Stifte (202, 204) einen Winkel von weniger als 180 Grad einschließen.

5. Positionier- und Montageschnittstelle (130) nach einem der vorstehenden Ansprüche,
**dadurch gekennzeichnet, dass**
ein Querschnitt der mindestens einen Aussparung (144, 146) mindestens teilweise als Kreisringsektor gebildet ist.

6. Positionier- und Montageschnittstelle (130) nach einem der vorstehenden Ansprüche,
**dadurch gekennzeichnet, dass**
ein Innenradius (r₂) einer zweiten Aussparung (146) kleiner ist als ein Innenradius (r₁) einer ersten Aussparung (144).

7. Positionier- und Montageschnittstelle (130) nach Anspruch 6,
**dadurch gekennzeichnet, dass**
die erste Aussparung (144) an der radial außenliegenden Kante offen ist und die zweite Aussparung (146) eine vollständig geschlossene Kante aufweist.

8. Positionier- und Montageschnittstelle (130) nach einem der vorstehenden Ansprüche,
**dadurch gekennzeichnet, dass**
der ringförmige Abschnitt (140) eine Vielzahl von Rippen (154) umfasst, die quer zur Umfangsrichtung des ringförmigen Abschnitts (140) angeordnet sind, wobei die Vielzahl von Rippen (154) vorzugsweise äquidistant voneinander beabstandet sind.

9. Positionier- und Montageschnittstelle (130) nach einem der Ansprüche 3 bis 8,
**dadurch gekennzeichnet, dass**
die mindestens zwei Paare Stützstifte (138a, 138b) am Außenumfang der Schnittstelle (130) den Innenumfang des Aufnahmeabschnitts (200) der Luftsteuervorrichtung (1000) berührend angeordnet sind, bis die Trockenmittelpatrone (100) positioniert wird, wobei die Stützstifte (138) jedes Paares (138a, 138b) einen Winkel (α, β) einschließend voneinander beabstandet sind.

10. Positionier- und Montageschnittstelle (130) nach Anspruch 9,
**dadurch gekennzeichnet, dass**
der von einem Paar erster Stützstifte (138a) eingeschlossene Winkel (α) größer ist als der von einem Paar zweiter Stützstifte (138b) eingeschlossene Winkel (β), wobei vorzugsweise beide Winkel (α, β) kleiner als 90 Grad sind.

11. Positionier- und Montageschnittstelle (130) nach einem der Ansprüche 1 bis 10, **dadurch gekennzeichnet, dass**
die Schnittstelle (130) weiter einen Siebabschnitt (148) umfasst, der innerhalb der zentralen ringförmigen Buchse (142) angeordnet ist, wobei der Siebabschnitt (148) für Druckluft durchlässig ist.

12. Positionier- und Montageschnittstelle (130) nach einem der vorstehenden Ansprüche,
**dadurch gekennzeichnet, dass**
die Schnittstelle (130) weiter mindestens einen Auslass für ein Rückschlagventil (150) umfasst, das außerhalb des ringförmigen Abschnitts (140) angeordnet ist.

13. Trockenmittelpatrone (100), die ein Gehäuse (110) und einen Patroneneinsatz (120) umfasst, der eine Positionier- und Montageschnittstelle (130) nach einem der vorstehenden Ansprüche aufweist, wobei das Gehäuse (110) am Patroneneinsatz (120) angebracht ist.

14. Luftsteuervorrichtung (1000) für ein Fahrzeug, insbesondere ein Nutzfahrzeug, die einen Aufnahmeabschnitt (200), einen Bajonettring (300) und eine Trockenmittelpatrone (100) nach Anspruch 14 umfasst, die in dem Aufnahmeabschnitt (200) montiert und durch den Bajonettring (300) an der Luftsteuervorrichtung (1000) gesichert ist.

## Revendications

1. Interface de positionnement et de montage (130) pour positionner et monter une cartouche déshydratante (100) dans un dispositif de régulation d'air (1000) d'un véhicule, en particulier un véhicule utilitaire, dans laquelle l'interface (130) comprend une partie annulaire (140) présentant au moins un évidement (144, 146) pour se mettre en prise avec au moins une broche (202, 204) d'une partie de réception (200) du dispositif de régulation d'air (1000), et **caractérisée en ce que**
l'interface (130) comprend en outre une douille annulaire centrale (142) destinée à se mettre en prise avec une buse centrale (206) de la partie de réception (200) du dispositif de régulation d'air (1000), dans laquelle la douille annulaire centrale (142) est agencée à l'intérieur de la partie annulaire (140).

2. Interface de positionnement et de montage (130) selon la revendication 1,
**caractérisée en ce que**
la partie annulaire (140) présente au moins deux évidements (144, 146) destinés à se mettre en prise avec au moins deux broches (202, 204) de la partie de réception (200) du dispositif de régulation d'air (1000).

3. Interface de positionnement et de montage (130) selon l'une des revendications précédentes,
**caractérisée en ce que**
l'interface (130) comprend en outre au moins deux paires de broches de support (138a, 138b) agencées radialement à l'extérieur de la partie annulaire (140).

4. Interface de positionnement et de montage (130) selon l'une des revendications 2 et 3,
**caractérisée en ce que**
chaque deux évidements (144, 146) et/ou chaque deux broches (202, 204) forment un angle inférieur à 180 degrés.

5. Interface de positionnement et de montage (130) selon l'une des revendications précédentes,
**caractérisée en ce que**
une section transversale du ou des évidements (144, 146) est formée au moins partiellement comme un secteur d'anneau circulaire.

6. Interface de positionnement et de montage (130) selon l'une des revendications précédentes,
**caractérisée en ce que**
un rayon intérieur (r₂) d'un second évidement (146) est plus petit qu'un rayon intérieur (r₁) d'un premier évidement (144).

7. Interface de positionnement et de montage (130) selon la revendication 6,
**caractérisée en ce que**
le premier évidement (144) est ouvert au niveau du bord radialement extérieur et le second évidement (146) présente un bord entièrement fermé.

8. Interface de positionnement et de montage (130) selon l'une des revendications précédentes,
**caractérisée en ce que**
la partie annulaire (140) comprend une pluralité de nervures (154) agencées transversalement à la direction circonférentielle de la partie annulaire (140), dans laquelle la pluralité de nervures (154) sont de préférence espacées de manière équidistante les unes des autres.

9. Interface de positionnement et de montage (130) selon l'une des revendications 3 à 8,
**caractérisée en ce que**
les au moins deux paires de broches de support (138a, 138b) sont agencées sur la circonférence externe de l'interface (130) en contact avec la circonférence interne de la partie de réception (200) du dispositif de régulation d'air (1000) jusqu'à ce que la cartouche déshydratante (100) soit positionnée, dans laquelle les broches de support (138) de chaque paire (138a, 138b) sont espacées l'une de l'autre en formant un angle (α, β).

10. Interface de positionnement et de montage (130) selon la revendication 9,
**caractérisée en ce que**
l'angle (α) formé par une paire de premières broches de support (138a) est supérieur à l'angle (β) formé par une paire de secondes broches de support (138b), dans laquelle de préférence les deux angles (α, β) sont inférieurs à 90 degrés.

11. Interface de positionnement et de montage (130) selon l'une des revendications 1 à 10,
**caractérisée en ce que**
l'interface (130) comprend en outre une partie tamis (148) agencée à l'intérieur de la douille annulaire centrale (142), dans laquelle la partie tamis (148) est perméable à l'air sous pression.

12. Interface de positionnement et de montage (130) selon l'une des revendications précédentes,
**caractérisée en ce que**
l'interface (130) comprend en outre au moins une sortie pour un clapet anti-retour (150) agencée à l'extérieur de la partie annulaire (140).

13. Cartouche déshydratante (100) comprenant un boîtier (110) et un insert de cartouche (120) présentant une interface de positionnement et de montage (130) selon l'une des revendications précédentes, dans laquelle le boîtier (110) est fixé à l'insert de cartouche (120).

14. Dispositif de régulation d'air (1000) pour un véhicule, en particulier un véhicule utilitaire, comprenant une partie de réception (200), un anneau à baïonnette (300) et une cartouche déshydratante (100) selon la revendication 14 qui est montée dans la partie de réception (200) et fixée au dispositif de régulation d'air (1000) par l'anneau à baïonnette (300).
